# EUROPEAN PATENT SPECIFICATION

(11) **EP 4 150 234 B1**
(45) Date of publication and mention of the grant of the patent: **04.12.2024**
(21) Application number: 21732114.0
(22) Date of filing: 13.05.2021
(51) Int. Cl.: F16H 48/08, F16H 37/08, F16H 48/42, F16H 57/02

(54) **DIFFERENTIAL UNIT WITH DIFFERENT VELOCITIES**
DIFFERENTIALEINHEIT MIT VERSCHIEDENEN GESCHWINDIGKEITEN
UNITÉ DIFFÉRENTIELLE AVEC DES VITESSES DIFFÉRENTES

(30) Priority: 13.05.2020 IT 202000010894
(43) Date of publication of application: 22.03.2023
(73) Proprietor: IVECO S.P.A., 10156 Torino (IT)
(72) Inventor: PEREIRA DE LEMOS, Josè Francivaldo, Sete Lagoas MG (BR)
(74) Representative: Studio Torta S.p.A.
(86) International application number: PCT/IB2021/054100
(87) International publication number: WO 2021/229492

(56) References cited:
- US-A- 1 689 377
- US-A- 2 120 594
- US-A- 2 147 146
- US-A- 2 383 954
- US-A- 2 686 437

## Description

### TECHNICAL FIELD

The invention relates to a differential group, more in particular to a differential group for a heavy vehicle, such as a truck.

### KNOWN STATE OF THE ART

The differential is a power transmission member available in vehicles to distribute the torque coming from an input shaft to a pair of output shafts connected to respective wheels. In particular, as it is known, the differential allows different velocities to be delivered to the wheels, so as to allow each one of them to follow the relative trajectory during paths covering a bend or paths with different grips.

In its simplest configuration, a differential comprises a carrier, to which two shafts are constrained, and two satellites, which are placed on the shafts and mesh with two driven planetary gears, which are integral to the axle shafts, each connected to the respective wheel.

Known differentials are also provided with a locking function, which is configured to cause the two axle shafts to be integral to one another. This function is useful in case of a surface allowing for a reduced grip of the tyres, in which case one of the two wheels, if it were not constrained to the other one, would tend to skid, thus dispersing the torque.

However, known differentials are subjected to a constant need for improvements, so as to ensure a versatile use thereof and increase the functions thereof.

Examples of such known differentials are disclosed in US1689377 A, US2686437 A, US2383954 A, US2147146 A or US2120594 A.

Therefore, existing vehicle differentials need to be improved.

The object of the invention is to fulfil the needs discussed above in an economic fashion.

### SUMMARY OF THE INVENTION

According to the invention, this object is solved by a differential group according to claim 1, the dependent claims show further advantageous embodiments of the invention.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 shows an axle comprising a differential group according to the invention;
- Figure 2 shows a schematic sectional view, with parts removed for greater clarity, of the differential group according of figure 1 in a first operating condition;
- Figure 3 shows a schematic sectional view, with parts removed for greater clarity, of the differential group of figure 1 in a second operating condition;
- Figures 4A and 4B show the differential group of figures 2 and 3, respectively, indicating, by means of arrows, the torque flow according to the invention in the two different operating conditions;
- Figure 5 shows an axle comprising a differential group according to an example embodiment, not according to the invention;
- Figure 6 shows a schematic sectional view, with parts removed for greater clarity, of the differential group of figure 5 in a first operating condition;
- Figure 7 shows a schematic sectional view, with parts removed for greater clarity, of the differential group of figure 5 in a second operating condition;
- Figures 8A and 8B show the differential group of figures 6 and 7, respectively, indicating, by means of arrows, the torque flow according to the invention in the two different operating conditions;
- Figure 9 shows an axle comprising a differential group according to a further example embodiment, not according to the invention;
- Figure 10 shows a schematic sectional view, with parts removed for greater clarity, of the differential group according of figure 9 in a first operating condition;
- Figure 11 shows a schematic sectional view, with parts removed for greater clarity, of the differential group according of figure 9 in a second operating condition; and
- Figures 12A and 12B show the differential group of figures 10 and 11, respectively, indicating, by means of arrows, the torque flow according to the invention in the two different operating conditions.

### DETAILED DESCRIPTION OF THE INVENTION

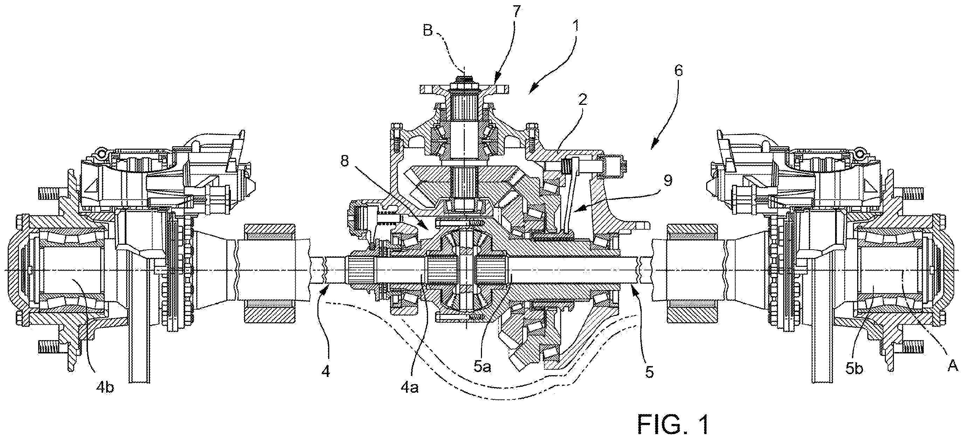

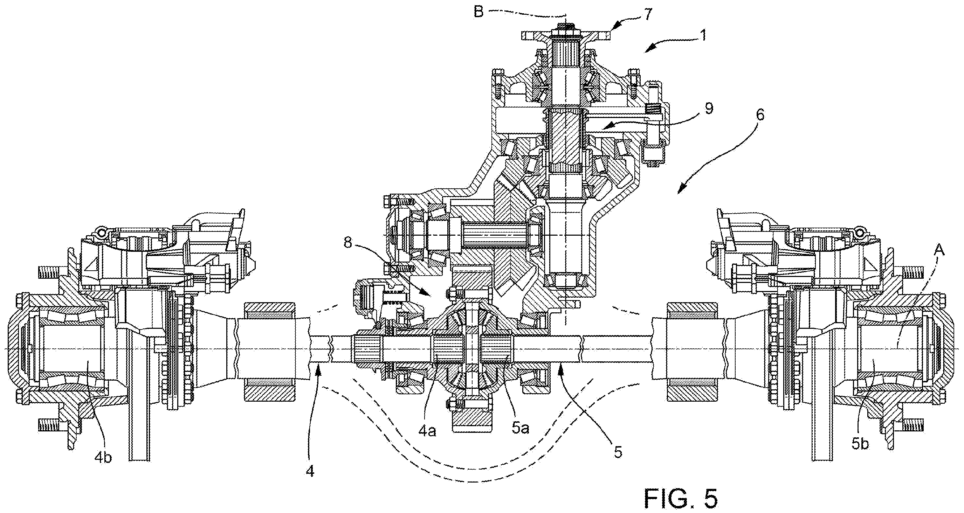

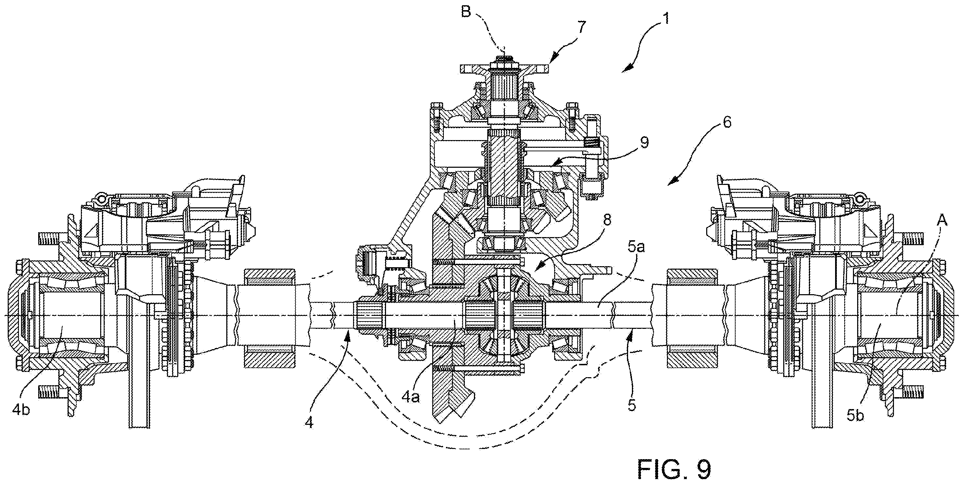

In the accompanying figures, number 1 indicates a differential group 1 according to the invention housed inside a casing 2 configured to delimit an inner space 3 suited for the purpose. The casing 2 further is advantageously configured to house part of the axle shafts 4, 5 of an axle 6, as shown in figure 1, 5 or 9. To this aim, the casing 2 can be manufactured as one single piece or in different parts depending on the assembling needs of the differential group 1 and of the axle 6.

The differential group 1 is operatively interposed between the axle shafts 4, 5 and a drive source 7, such as a transmission shaft configured to convey the torque of an internal combustion engine or an electric motor, which is configured to transmit a torque to the axle shafts 4, 5.

The axle shafts 4, 5, as it is known, are advantageously concentric to one another around a common longitudinal axis A, cooperate - with a respective inner end 4a, 5a - with the differential group 1 and define a wheel hub at outer ends 4b, 5b of theirs.

The differential group 1 comprises a differential 8 and a transmission 9, the differential 8 being operatively interposed between the axle shafts 4, 5 and the transmission 9 and the latter being operatively interposed between the differential 8 and the drive source 7.

The differential 8 is of a known type and comprises a carrier 11, which carries a plurality of satellites 13, for example four satellites, which are angularly equally spaced apart from one another by 90° and are supported by a cross-shaped support 14, which is rigidly carried by the carrier 11 and around whose arms the satellites 13 can rotate. In particular, the satellites rotate on the support 14 around axes contained in a plane, which is perpendicular to the axis A.

The satellites 13 cooperate with a planetary comprising a left bevel gear 15a and a right bevel gear 16b, respectively, which are rigidly carried by the axle shaft 4 and by the axle shaft 5, respectively, on the respective inner portion.

The transmission 9 basically comprises a pair of bevel gears 17, 18, which are operatively interposed between the drive source 7 and the differential 8 so as to alternatively connect the drive source 7 and the differential 8, defining different torque transmission ratios between them.

In particular, each bevel gear 17, 18 comprises a first and a second bevel wheels 17a, 17b, 18a, 18b meshing with one another and, advantageously, the first and the second bevel wheels 17a, 17b, 18a, 18b are coaxial to one another and are sized so that a gear 17 defines a pair of toothed wheels 17a, 17b having a greater primitive diameter than the other gear 18.

In detail, the pinions 18b, 18b and the crowns 18a, 18a of the gears 17, 18 axially face one another and, advantageously, a crown 17a is supported on the other crown 18a in a rotary free manner, whereas the pinions 17b, 18b are integral to one another in the rotation or, vice versa, a pinion 17b is supported on the other pinion 18b in a rotary free manner, whereas the crowns 17a, 18a are integral to one another in the rotation.

In particular, the pair of bevel wheels 17a, 17b, 18a, 18b, which are free to rotate on one another, can selectively be engaged, alternatively relative to one another, between the drive source 7 and the carrier 11 of the differential 8, so as to define different gear ratios.

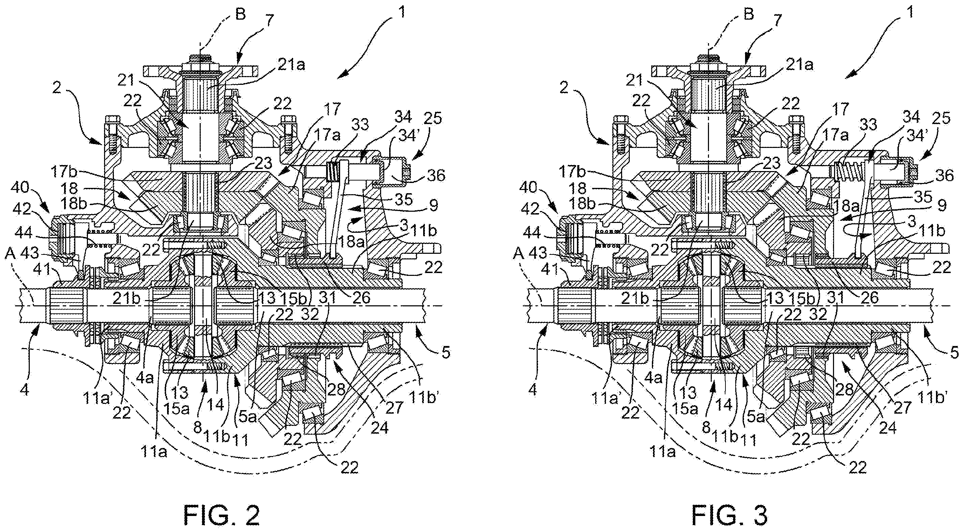

According to the embodiment of figures 2 and 3, the pinions 17b, 18b are coupled to one another in a rotary manner, whereas the crowns 17a, 18a are supported on one another with a free rotation.

In particular, the transmission 9 comprises a shaft 21 with axis B, perpendicular to the axis A of the axle shafts 4, 5, which is carried by the structure 2 in a rotary free manner and is configured to be coupled to the drive source 7 so as to allow the torque to be transmitted. In particular, the shaft 21 is radially and axially supported, relative to the axis A, by means of support means, such as rolling bearings 22.

The shaft 21 defines a first end portion 21a and a second end portion 21b on the opposite side relative to the first one with respect to the axis B. The shaft 21 is advantageously configured to be connected to the drive source 7 close to the first end portion 21a.

The pinions 17b, 18b are carried by the shaft 21, coupled to it in a rotary manner, for example by means of a grooved coupling 23. More in detail, the pinion 17b of the first bevel gear 17 is arranged axially in contact with the pinion 17b of the second bevel gear 18; furthermore, the pinion 17b has a greater diameter than the pinion 18b. Preferably, the pinions 17b, 18b are carried by the shaft 21 close to the second end portion 21b; more preferably, the pinion 18b is carried in a more terminal position than the pinion 17b.

The crowns 17a, 18a mesh with the respective pinion 17b, 18b and, hence, are similarly sized, namely the crown 17a has a greater diameter than the crown 18a. In particular, the crowns 17a, 18b are supported, in a rotary free manner radially and axially relative to the axis A, between the carrier 11 of the differential 8 and the casing 2, preferably thanks to support means, such as rolling bearings 22.

In particular, the two crowns 17a, 18a axially face one another along the axis A and have, interposed between them, a support means of the type described above.

Each crown 17a, 18a can selectively be connected to the carrier 11 by means of a selector 24, which is configured to slide on the carrier 11 and is coupled to it in a rotary manner and is configured to couple one of the crowns 17a, 18a to the carrier 11 in a rotary manner.

In particular, the selector 24 is moved by actuator means 25, which are configured to allow one of the crowns 17a, 18a to be selectively coupled to the carrier 11, said actuator means preferably being as described below.

In the embodiment described herein, the carrier 11 is manufactured in two distinct tubular portions 11a, 11b, a left one and a right one respectively, which are coupled to one another and surround the left axle shaft 4 and the right axle shaft 5 respectively. Consequently, each portion 11a, 11b is hollow and defines an opening to allow for the passage of the respective axle shaft 4, 5.

In particular, the right portion 11b comprises a tubular portion 11b' extending along the axis A to a greater extent than the respective tubular portion 11a' of the left portion 11a. Advantageously, the selector 24 comprises a sleeve 26 with a tubular shape, which is housed around the carrier 11 and is carried by the latter so as to slide on the tubular portion 11b' of the right portion 11b along the axis A and be coupled to the tubular portion 11b' in its rotation.

Advantageously, the coupling between the sleeve 26 and the tubular portion 11b' is obtained by means of a grooved coupling 27, for example a splined coupling.

On the opposite side relative to the grooved coupling 27, the sleeve 26 defines a toothing 28, hence radially extending from the outer surface of the sleeve 26. Said toothing 28 is configured to cooperate with a respective toothing 31, 32 obtained in the hub of the crowns 17a, 18a so as to make them integral, in their rotation, to the sleeve 26.

The sleeve 26 is held in a first operating position (figure 3) by means of a force operated by elastic means 33, for example a helical spring wound around a pin 34 carried by a connecting rod 35 connected to the sleeve 26. In this operating position, the toothing 28 meshes with the toothing 31, thus making the crown 17a integral to the carrier 11.

The actuator means 25 are configured to overcome the force exerted by the elastic means 33 in order to move the connecting rod 35 and, hence, the sleeve 26 to a second operating position (figure 2), in which the toothing 28 meshes with the toothing 32, hence making the crown 18a integral to the carrier 11.

Advantageously, the actuator means 25 comprise a pneumatic thrust system. Advantageously, said pneumatic thrust system comprises a chamber 36, where an end portion 34' of the pin 34 is housed so as to slide in the chamber 36 in a sealing manner. The chamber 36 is fluidically connected to a source of air under pressure, so as to be selectively filled with or emptied from said air under pressure.

The end portion 34' can slide in a sealing manner in the chamber 36 depending on the force balance between the thrust provided by the elastic means 33 to the pin 34 and the pressure of the air in the chamber 36 exerted on the pin 34 by means of the portion 34'.

The differential group 1 can further comprise blocking means 40, which are configured to lock the differential 8, namely make the carrier 11 integral to the casing 2.

In particular, the blocking means 40 comprise a sleeve 41, which is carried close to the left portion 11a of the carrier 11. In the embodiment described herein, the sleeve 41 is housed, in a sliding manner, coaxially to the left axle shaft 4 and is configured to define a selective coupling with the carrier 11, by means, for example, of a shape coupling, preferably a toothed one, between itself and the annular portion 11a' of the left portion 11a of the carrier 11.

Hence, the sleeve 41 is configured to operatively assume a first position, in which it is free relative to the axle shaft 4 and to the carrier 11, and a second condition, in which it cooperates in contact, through the shape coupling, with the carrier 11, thus making it integral to the casing 2 and, hence, allowing the velocity coming from the carrier 11 to be equally divided between the axle shafts 4, 5, basically cancelling the function of the differential 8.

The sleeve 41 is operated by means of an actuator means, for example a pneumatic one, preferably similar to the actuator means 25 and, hence, comprising a chamber 42 in which a piston 43 is free to slide in a sealing manner. The chamber 43 is fluidically connected to a source of air under pressure, so as to be selectively filled with or emptied from said air under pressure. The piston 43 is held in a rest position by elastic means 44, which are configured to exert, upon the piston 43, a force that is contrary to the one exerted by the pressure in the chamber 42 upon the piston 43 itself.

The latter, hence, can slide in a sealing manner in the chamber 42 depending on the force balance between the thrust provided by the elastic means 44 and the pressure of the air in the chamber 42 exerted on it.

The piston 43 is further connected to the sleeve 41 so that, when there is no air inside the chamber 42, it allows the sleeve 41 to be free relative to the axle shaft 4 and to the carrier 11, whereas, when there is air under pressure in the chamber 42, the thrust provided by the elastic means 44 acting upon the piston is overcome, so that the latter moves, coupling the sleeve 41 to the carrier 11 and making it integral to the casing 2.

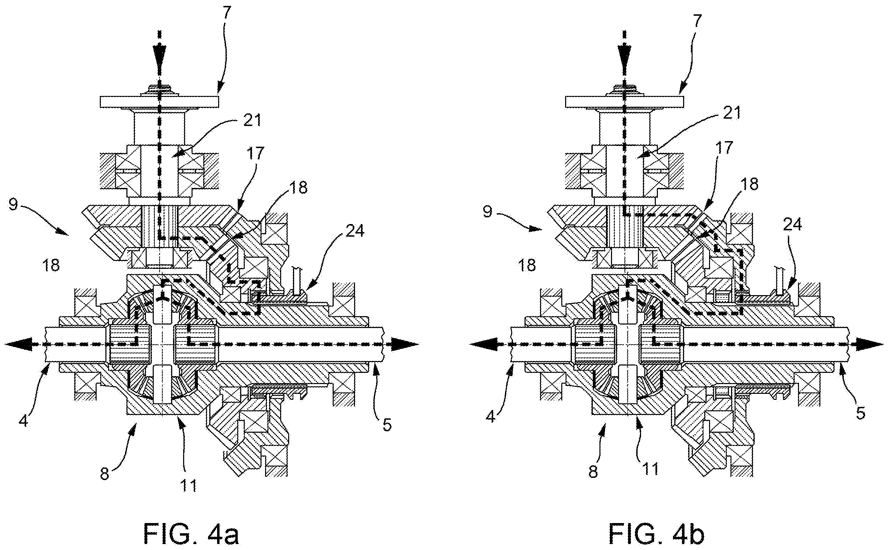

The operation of the embodiment described above will now be explained with reference to figures 4A-4B.

In the condition of figure 4A, the actuator means 25 control the sleeve 26 so that the toothing 28 meshes with the toothing 32, thus making the crown 18a integral to the carrier 11. The torque coming from the drive source 7 is transmitted to the shaft 21 and, from there, to the pair of pinions 17b, 18b. Then, the torque is transmitted to the crowns 17a, 18b, the crown 17a rotating in an idle manner, whereas the crown 18a transmits the torque to the carrier 11 and, hence, to the differential 8, which divides it, in a known manner, between the axle shafts 4, 5.

In the condition of figure 4B, the actuator means 25 control the sleeve 26 so that the toothing 28 meshes with the toothing 31, thus making the crown 17a integral to the carrier 11. The torque coming from the drive source 7 is transmitted to the shaft 21 and, from there, to the pair of pinions 17b, 18b. Then, the torque is transmitted to the crowns 17a, 18b, the crown 18a rotating in an idle manner, whereas the crown 17a transmits the torque to the carrier 11 and, hence, to the differential 8, which divides it, in a known manner, between the axle shafts 4, 5.

Clearly, in the two conditions, the gear ratio is different because of the different dimensions of the bevel gears 17, 18. The shift between the conditions of figures 4B and 4A is obtained through the pressurization of the chamber 36, as described above.

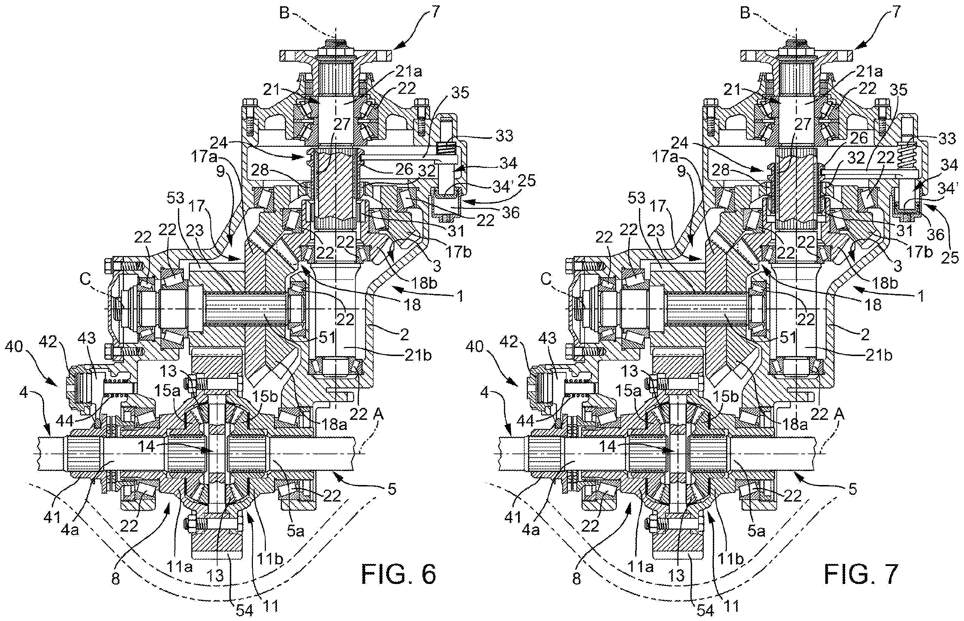

According to the embodiment of figures 6 and 7, the pinions 17b, 18b are supported on one another with a free rotation, whereas the crowns 17a, 18a are coupled to one another in a rotary manner.

In particular, the transmission 9 comprises a shaft 21 with axis B, perpendicular to the axis A of the axle shafts 4, 5, which is carried by the structure 2 in a rotary free manner and is configured to be coupled to the drive source 7 so as to allow the torque to be transmitted. In particular, the shaft 21 is radially and axially supported, relative to the axis A, by means of support means, such as rolling bearings 22.

The shaft 21 defines a first end portion 21a and a second end portion 21b on the opposite side relative to the first one with respect to the axis B. The shaft 21 is advantageously configured to be connected to the drive source 7 close to the first end portion 21a.

The pinions 17b, 18b are carried by the shaft 21 in a rotary free manner and can selectively be coupled to the latter through a selector 24, which is configured to slide on the shaft 21 and is coupled to the latter in a rotary manner and is also configured to couple one of the pinions 17b, 18b to the shaft 21 in a rotary manner.

In particular, the selector 24 is moved by actuator means 25, which are configured to allow one of the pinions 17b, 18b to be selectively coupled to the shaft 21, said actuator means preferably being as described below.

More in detail, the pinion 17b has a greater diameter than the pinion 18b and they are supported, in a rotary free manner radially and axially relative to the axis B, between the shaft 21 and the casing 2, preferably thanks to support means, such as rolling bearings 22.

The crowns 17a, 18a mesh with the respective pinion 17b, 18b and, hence, are similarly sized, namely the crown 17a has a greater diameter than the crown 18a.

In particular, the transmission 9 comprises a further shaft 50, which extends along an axis C perpendicular to the axis A and is supported by the casing 2 thanks to support means, such as rolling bearings 22. Advantageously, the two crowns 17a, 18a are rigidly carried, for example thanks to a grooved coupling 23, on the shaft 51 and are in axial contact with one another.

The shaft 51 is operatively connected to the carrier 11, advantageously by means of a gear 52, which is preferably obtained between a toothed gear 53 carried by the shaft 51, for example thanks to the grooved coupling 23 connected the crown 7a, 8a, and is configured to cooperate with a toothing 54 carried by the carrier 11. Advantageously, the toothed gear 53 and the crowns 17a, 18a are in axial contact with one another.

In the embodiment described herein, the carrier 11 is manufactured in two distinct portions 11a, 11b, a left one and a right one respectively, which are coupled to one another and surround the left axle shaft 4 and the right axle shaft 5 respectively. Consequently, each portion 11a, 11b is hollow and defines an opening to allow for the passage of the respective axle shaft 4, 5.

Preferably, the toothing 54 is obtained on an annular element, which is separate and is fixed to one of the portions 11a, 11b or, like in the case described herein, is fixed to both of them through threaded means, in particular is "clamped" between them.

Advantageously, the selector 24 comprises a sleeve 26, which is carried by the shaft 21 so as to slide on it along the axis B and be coupled to it in its rotations. Preferably, the coupling between the sleeve 26 and the shaft 21 is obtained by means of a grooved coupling 27, for example a splined coupling.

On the opposite side relative to the grooved coupling 27, the sleeve 26 defines a toothing 28 radially extending from the outer surface of the sleeve 26. Said toothing 28 is configured to cooperate with a respective toothing 31, 32 obtained in the hub of the pinions 17b, 18b so as to make them integral, in their rotation, to the sleeve 26.

The sleeve 26 is held in a first operating position (figure 7) by means of a force operated by elastic means 33, for example a helical spring wound around a pin 34 carried by a connecting rod 35 connected to the sleeve 26. In this operating position, the toothing 28 meshes with the toothing 32, thus making the pinion 17b integral to the shaft 21.

The actuator means 25 are configured to overcome the force exerted by the elastic means 33 in order to move the connecting rod 35 and, hence, the sleeve 26 to a second operating position (figure 6), in which the toothing 28 meshes with the toothing 31, hence making the pinion 18b integral to the shaft 21.

Advantageously, the actuator means 25 comprise a pneumatic thrust system. Advantageously, said pneumatic thrust system comprises a chamber 36, where an end portion 34' of the pin 34 is housed so as to slide in the chamber 36 in a sealing manner. The chamber 36 is fluidically connected to a source of air under pressure, so as to be selectively filled with or emptied from said air under pressure.

The end portion 34' can slide in a sealing manner in the chamber 36 depending on the force balance between the thrust provided by the elastic means 33 to the pin 34 and the pressure of the air in the chamber 36 exerted on the pin 34 by means of the portion 34'.

The differential group 1 can further comprise blocking means 40, which are configured to lock the differential 8, namely make the carrier 11 integral to the casing 2.

In particular, the blocking means 40 are similar to the ones of the embodiment of figures 2 and 3 and, therefore, they will not be described for the sake of brevity.

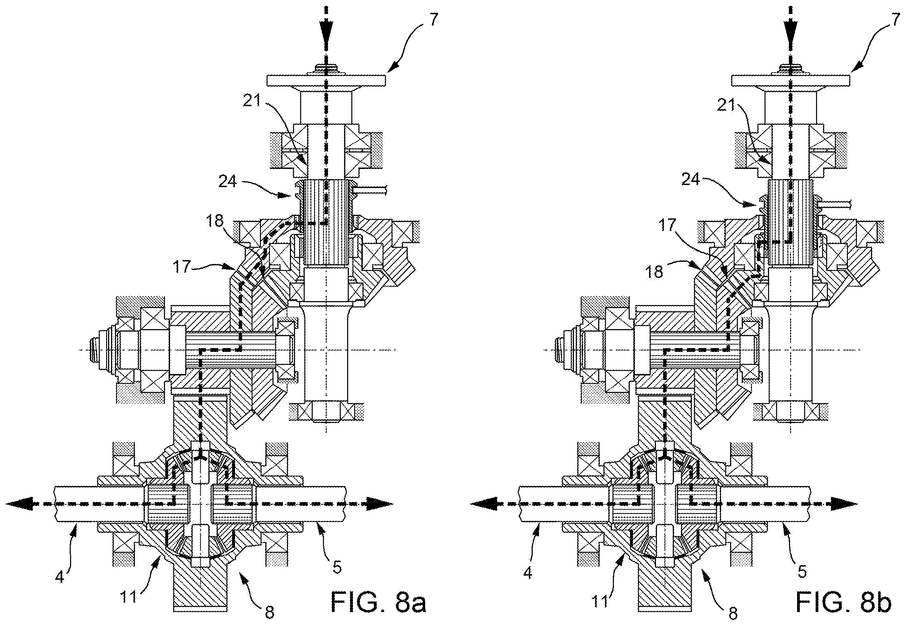

The operation of the embodiment described above will now be explained with reference to figures 8A, 8B.

In the condition of figure 8A, the actuator means 25 control the sleeve 26 so that the toothing 28 meshes with the toothing 31, thus making the pinion 17b integral to the shaft 21. The torque coming from the drive source 7 is transmitted to the shaft 21 and, from there, to the sole pinion 17b. Then, the torque is transmitted to the crown 17a and, hence, to the shaft 51. The latter causes the rotation of the toothed gear 53 and of the crown 18a, which meshes with the pinion 17b, which rotates in an idle manner. Hence, the torque is transmitted from the toothed gear 53 to the carrier 11 and, then, to the differential 8, which divides it, in a known manner, between the axle shafts 4, 5.

In the condition of figure 8B, the actuator means 25 control the sleeve 26 so that the toothing 28 meshes with the toothing 32, thus making the pinion 18b integral to the shaft 21. The torque coming from the drive source 7 is transmitted to the shaft 21 and, from there, to the sole pinion 18b. Then, the torque is transmitted to the crown 18a and, hence, to the shaft 51. The latter causes the rotation of the toothed gear 53 and of the crown 17a, which meshes with the pinion 17A, which rotates in an idle manner. Hence, the torque is transmitted from the toothed gear 53 to the carrier 11 and, then, to the differential 8, which divides it, as known, between the axle shafts 4, 5.

Clearly, in the two conditions, the gear ratio is different because of the different dimensions of the bevel gears 17, 18. Furthermore, the gearing between the toothed gear 53 and the toothing 54 allows for a further transmission step in addition to the one of the bevel gears 17, 18.

The shift between the conditions of figures 8B and 8A is obtained through the pressurization of the chamber 36, as described above.

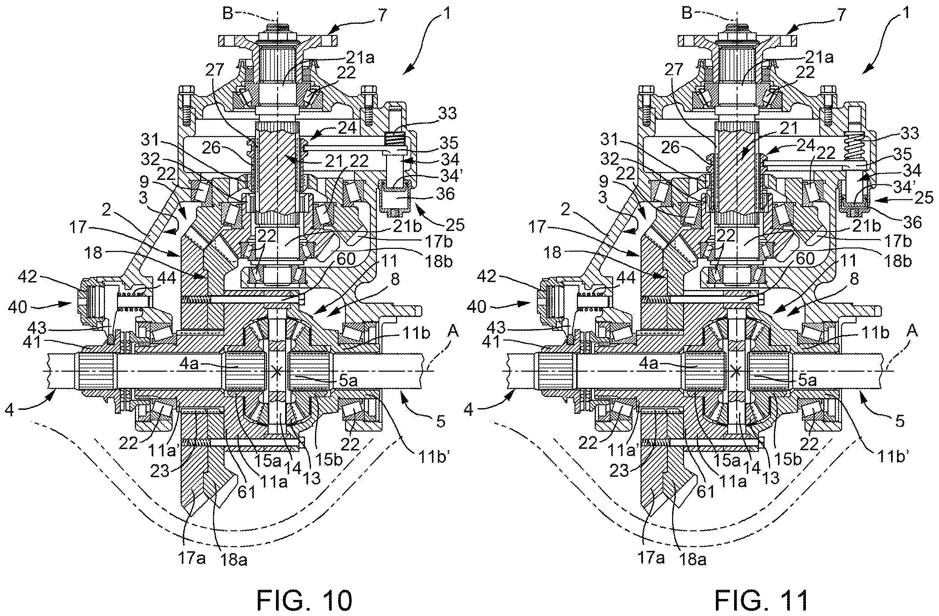

According to the embodiment of figures 10 and 11, the pinions 17b, 18b are supported on one another with a free rotation, whereas the crowns 17a, 18a are coupled to one another in a rotary manner.

For the sake of brevity, the structure of the transmission 9 in terms of pinions 17b, 18b and of their coupling to the crowns 17a, 18a will not be described again, since it is substantially identical to the one of the embodiment of figures 6 and 7.

In the particular embodiment described herein, the carrier 11 is manufactured in two distinct tubular portions 11a, 11b, a left one and a right one respectively, which are coupled to one another and surround the left axle shaft 4 and the right axle shaft 5 respectively. Consequently, each portion 11a, 11b is hollow and defines an opening to allow for the passage of the respective axle shaft 4, 5.

In particular, the right portion 11b comprises a tubular portion 11b' extending along the axis A to a greater extent than the respective tubular portion 11a' of the left portion 11a.

The crowns 17a 18a are directly rigidly connected to the carrier 11, in particular thanks, for example, to a grooved coupling 23 obtained on the left portion 11a.

In particular, the crowns 17a, 18a are integral to the carrier 11; in particular, they are axially locked along the axis A thanks to threaded means 61 connecting both crowns 17a, 18a to the left and right portions 11a, 11b. More in detail, both crowns 17a, 18a are axially in contact with one another along the axis A and are carried by the sole left portion 11a of the carrier 11.

More in detail, an abutment 61 radially extends from the left tubular portion 11a' in the area of contact with the right portion 11b and is configured to define an axial support for the crowns 17a, 18a.

The selector 24 and the actuator means 25 connect the pinions 17b, 18b to the shaft 21 as described in the embodiment of figures 6, 7 and, therefore, they will not be described for the sake of brevity.

In particular, the blocking means 40 are similar to the ones of the embodiment of figures 2, 3 and 6, 7 and, therefore, they will not be described for the sake of brevity.

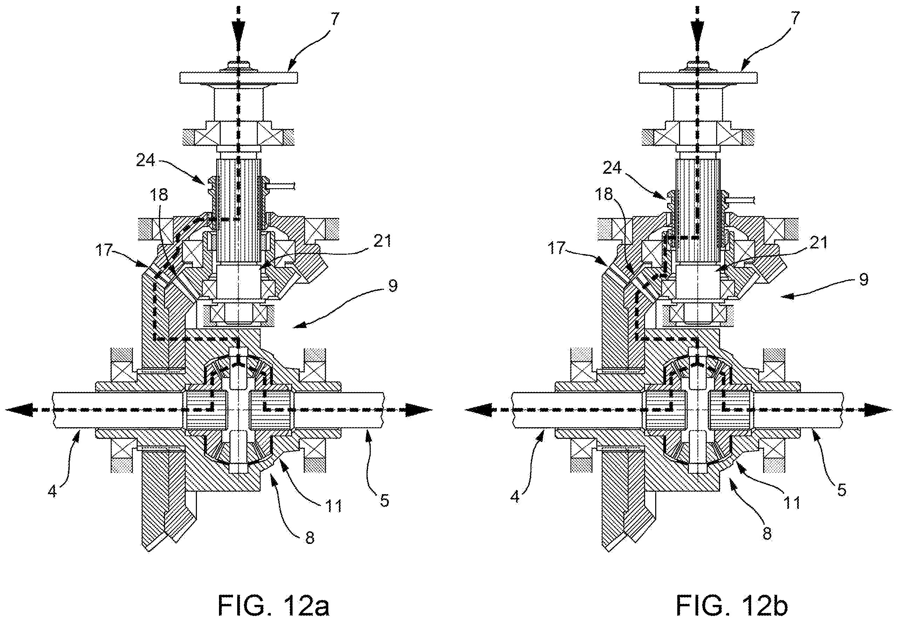

The operation of the embodiment described above will now be explained with reference to figures 12A, 12B and is similar to the one of figures 8A, 8B.

In the condition of figure 12A, the actuator means 25 control the sleeve 26 so that the toothing 28 meshes with the toothing 31, thus making the pinion 17b integral to the shaft 21. The torque coming from the drive source 7 is transmitted to the shaft 21 and, from there, to the sole pinion 17b. Then, the torque is transmitted to the crown 17a and, hence, to the carrier 11, to which the crown 17a is directly connected, and, by so doing, to the differential 8, which divides it, in a known manner, between the axle shafts 4, 5. The crown 18a rotates together with the carrier 11 and meshes with the pinion 17b, which rotates in an idle manner.

In the condition of figure 12A, the actuator means 25 control the sleeve 26 so that the toothing 28 meshes with the toothing 31, thus making the pinion 17b integral to the shaft 21. The torque coming from the drive source 7 is transmitted to the shaft 21 and, from there, to the sole pinion 17b. Then, the torque is transmitted to the crown 17a and, hence, to the carrier 11, to which the crown 17a is directly connected, and, by so doing, to the differential 8, which divides it, in a known manner, between the axle shafts 4, 5. The crown 18a rotates together with the carrier 11 and meshes with the pinion 17b, which rotates in an idle manner.

Clearly, in the two conditions, the gear ratio is different because of the different dimensions of the bevel gears 17, 18.

The shift between the conditions of figures 12B and 12A is obtained through the pressurization of the chamber 36, as described above.

In all embodiments described above, the differential group 1 further comprises several functional elements, such as anti-dust rings, spacers, o-rings, threaded elements, splines or bearings configured to allow a correct assembly and operation of the structure schematically disclosed above, which are not discussed in the detail for the sake of brevity.

In all the embodiments described above and in the relative operating modes, the operation of the actuator means 25 can be controlled by means of an electronic control unit (not shown), for example the ECU of the vehicle, which is configured to allow compressed air to flow in and out.

In the operating conditions described above, the blocking means 40 are configured in such a way that the sleeve 41 is free relative to the axle shaft 4 and to the carrier 11. If the differential 8 needs to be locked, it is sufficient to control the blocking means 40 so that they couple the sleeve 41 to the carrier 11. In the case described herein, air just needs to be let into the chamber 42 so as to overcome the resistance of the elastic means 44 holding the sleeve 41 in the configuration shown and move the latter so that it is coupled to the carrier 11, thus making it integral to the casing 2.

Owing to the above, the advantages of a differential group 1 according to the invention are evident.

In particular, the differential group 1 allows for two possible gear ratios between the drive source 7 and the differential 8, thus increasing the versatility of the driving system of the heavy vehicle. In this way, it is possible to provide a versatile differential group for different types of driving styles and loads of the vehicle.

Furthermore, the differential group 1 is particularly compact thanks to the specific arrangement of the bevel gears 17, 18. Furthermore, the use of said bevel gears 17, 18 allows for a particularly sturdy differential, which is suited to high torque loads.

Moreover, thanks to the addition of a further gear, as shown in figures 6 and 7, the transmission 9 allows for a very large transmission ratio between the source 7 and the differential 8.

Finally, the differential group 1 according to the invention can be subjected to changes and variants, which, though, do not go beyond the scope of protection set forth in the appended claims.

For example, it is clear that the actuator means 25 can be of a different type, for example they can be mechanical or electromagnetic or hydraulic actuator means.

Furthermore, the pairs of toothed gears described herein can be of any type and size, in particular the description relates to gears with straight teeth, but they can obviously be of any type.

Similarly, the shape of the structure 2 or of the axle 6 can change depending on the type of vehicle, just like the elements of the differential 8.

## Claims

1. Differential group (1) for a heavy vehicle, said differential group (1) comprising a casing (2) defining a space (3), a differential (8) and a transmission (9) housed inside said space (3),
said differential (8) being configured to divide an input torque from a drive source (7) to said differential group (1) to a torque of axle shafts (4, 5) of said vehicle coaxial around an axis (A),
said transmission (9) being operatively interposed between said drive source (7) and a carrier (11) of said differential (8) and comprising a first and a second bevel gear (17, 18) and a support shaft (21),
said first and second bevel gear each comprising a crown (17a, 18a) and a pinion (17b, 18b) meshing with each other,
said support shaft (21) being connectable to said driving source (7) and being rotationally carried free from said casing (2),
one between said crowns (17a, 18a) and said pinions (17b, 18b) being rotationally coupled to one between said support shaft (21) and said carrier (11) and the other between said crowns (17a, 18a) and said pinions (17b, 18b) being selectively rotationally coupled to the other between said support shaft (21) and said carrier (11),
wherein the other between said crowns (17a, 18a) and said pinions (17b, 18b) can be selectively rotationally coupled to the other between said support shaft (21) and said carrier (11) by means of a selector (24) movable between a first operating condition in which it rotationally couples one of said crowns (17a, 18a) to the other between said support shaft (21) and said carrier (11) and a second operating condition wherein the other couples said crowns (17a, 18a) to the other between said support shaft (21) and said carrier (11), said selector (24) being controlled by actuator means (25) configured to carry it from the first to the second operating condition,
wherein said support shaft (21) carries said pinions (17b, 18b) which are rotationally coupled to it by means of a grooved coupling (23),
said selector (24) being configured to slide, coupled in rotation, to said carrier (11) to alternately couple one of said crowns (17a, 18a) to said carrier (11),
**characterized in that** said crowns (17a, 18a) being rotationally supported between said casing (2), said carrier (11) and between them by means of rotating support elements (22).

2. Differential group according to claim 1, wherein said support shaft (21) extends along an axis (B) perpendicular to said axle shafts (4, 5).

3. Differential group according to claim 1 or 2, wherein said gears (17, 18) are sized so that the primitive diameters of one (17) are greater than those of the other (18) .

4. Differential group according to any of the preceding claims, wherein said pinions (17a, 18b) and supported by said support shaft (21) by means of a grooved coupling (23).

5. Differential group according to one of the preceding claims, wherein said selector (24) comprises a tubular sleeve (26) configured to be housed around said carrier (11) and coupled thereto by means of a grooved coupling (23), said sleeve (26) being configured to move along said carrier (11) and defining a toothing (28) configured to selectively engage with respective teeth (31, 32) solidly connected respectively to said crowns (17a, 18a) according to the position of said sleeve (26) on said carrier (11).

6. Differential group according to claim 5, comprising elastic means (33) configured to exert a force such as to maintain said sleeve (26) in one of said first and second operating conditions.

7. Differential group according to one of the preceding claims, wherein said actuator means (25) comprise a pneumatic system.

8. Differential group according to claim 6 and 7, wherein said actuator means (25) is configured to exert a force contrary to that exerted by elastic means (33).

9. Differential group according to one of the preceding claims, comprising locking means (40) configured to lock the function of said differential (8).

10. Vehicle axle (6) comprises a first and second axle shaft (4, 5) and a differential group (1) configured to connect said axle shafts (4, 5) to a driving source (7) of said vehicle, said differential group (1) being made according to one of the preceding claims.

## Patentansprüche

1. Differentialgruppe (1) für ein Schwerlastfahrzeug, welche Differentialgruppe (1) ein Gehäuse, das einen Raum (3) begrenzt, ein Differential (8) und ein Getriebe (9) umfasst, das in dem Raum (3) aufgenommen ist,
welches Differential (8) dazu ausgebildet ist, ein Eingangsdrehmoment, das von einer Antriebsquelle (7) auf die Differentialgruppe (1) übertragen wird, in ein Drehmoment von Achswellen (4, 5) des Fahrzeugs aufzuteilen, die um eine Achse (A) koaxial angeordnet sind,
wobei das Getriebe (9) operativ zwischen der Antriebsquelle (7) und einem Träger (11) des Differentials (8) angeordnet ist und ein erstes und ein zweites Kegelrad (17, 18) und eine Lagerwelle (21) umfasst,
wobei das erste und das zweite Kegelrad jeweils eine Krone (17a, 18a) und ein Ritzel (17b, 18b) umfassen, die einander kämmen,
wobei die Lagerwelle (21) mit der Antriebsquelle (7) verbindbar ist und frei vom Gehäuse (2) drehbar getragen wird,
wobei eines von den Kronen (17a, 18a) und den Ritzeln (17b, 18b) drehbar mit einem von der Lagerwelle (21) und dem Träger (11) gekoppelt ist und dass andere von den Kronen (17a, 18a) und den Ritzeln (17b, 18b) selektiv drehbar mit dem anderen von der Lagerwelle (21) und dem Träger (11) gekoppelt ist,
wobei das andere von den Kronen (17a, 18a) und den Ritzeln (17b, 18b) selektiv drehbar mit dem anderen von der Lagerwelle (21) und Träger (11) mittels einer Auswahleinrichtung (24) gekoppelt werden kann, die zwischen einem ersten Betriebszustand, in welchem sie drehbar eines der Kronräder (17a, 18a) mit dem anderen von der Lagerwelle (21) und dem Träger (11) koppelt, und einem zweiten Betriebszustand beweglich ist, in welchem das andere die Kronräder (17a, 18a) mit dem anderen von der Lagerwelle (21) und dem Träger (11) koppelt, welche Auswahleinrichtung (24) durch Betätigungsmittel (25) gesteuert wird, dazu ausgebildet, sie von dem ersten in den zweiten Betriebszustand zu überführen,
wobei die Lagerwelle (21) die Ritzel (17b, 18b) trägt, die drehbar mit dieser durch eine Nutkupplung (23) gekoppelt sind,
wobei die Auswahleinrichtung (24) dazu ausgebildet ist, drehend gekoppelt zum Träger (11) zu gleiten, um wahlweise eines der Kronräder (17a, 18a) mit dem Träger (11) zu koppeln,
**dadurch gekennzeichnet, dass** die Kronräder (17a, 18a) drehbar zwischen dem Gehäuse (2), dem Träger (11) und zwischen diesen mittels rotierender Lagerelemente (22) gelagert sind.

2. Differentialgruppe gemäß Anspruch 1, bei welcher die Lagerwelle (21) sich entlang einer Achse (B) senkrecht zu den Achswellen (4, 5) erstreckt.

3. Differentialgruppe gemäß Anspruch 1 oder 2, bei welcher die Zahnräder (17, 18) derart bemessen sind, dass die Grunddurchmesser von einem (17) größer sind als diejenigen des anderen (18).

4. Differentialgruppe gemäß einem der vorhergehenden Ansprüche, bei welcher die Ritzel (17a, 18b) durch die Lagerwelle (21) mittels einer Nutkupplung (23) gelagert werden.

5. Differentialgruppe gemäß einem der vorhergehenden Ansprüche, bei welcher die Auswahleinrichtung (24) eine rohrförmige Manschette (26) umfassen, dazu ausgebildet, um den Träger (11) herum angeordnet zu sein und mit diesem durch eine Nutkupplung (23) gekoppelt zu sein, welche Manschette (26) dazu ausgebildet ist, sich entlang des Trägers (11) zu bewegen und welche eine Zahnung (28) festlegt, die dazu ausgebildet ist, selektiv mit den jeweiligen Zähnen (31, 32) einzugreifen, die fest mit den Kronrädern (17a, 18a) verbunden sind, entsprechend der Position der Manschette (26) auf dem Träger (11).

6. Differentialgruppe gemäß Anspruch 5, umfassend elastische Mittel (33), ausgebildet zur Ausübung einer Kraft zum Halten der Manschette (26) in einem aus den ersten und zweiten Betriebszuständen.

7. Differentialgruppe gemäß einem der vorhergehenden Ansprüche, bei welcher die Betätigungsmittel (25) ein pneumatisches System umfassen.

8. Differentialgruppe gemäß Anspruch 6 und 7, bei welcher die Betätigungsmittel (25) dazu ausgebildet sind, eine Kraft entgegen derjenigen auszuüben, die durch die elastischen Mittel (33) ausgeübt wird.

9. Differentialgruppe gemäß einem der vorhergehenden Ansprüche, umfassend Blockiermittel (40), ausgebildet zum Blockieren der Funktion des Differentials (8).

10. Fahrzeugachse (6), umfassend eine erste und eine zweite Achswelle (4, 5) und eine Differentialgruppe (1), ausgebildet zur Verbindung der Achswellen (4, 5) mit einer Antriebsquelle (7) des Fahrzeugs, welche Differentialgruppe (1) gemäß einem der vorhergehenden Ansprüche ausgebildet ist.

## Revendications

1. Groupe différentiel (1) pour un véhicule lourd, ledit groupe différentiel (1) comprenant un boîtier (2) définissant un espace (3), un différentiel (8) et une transmission (9) logés à l'intérieur dudit espace (3),
ledit différentiel (8) étant configuré pour diviser un couple d'entrée d'une source d'entraînement (7) audit groupe différentiel (1) en un couple d'arbres d'essieu (4, 5) dudit véhicule coaxial autour d'un axe (A),
ladite transmission (9) étant fonctionnellement interposée entre ladite source d'entraînement (7) et un porteur (11) dudit différentiel (8) et comprenant des premier et second engrenages (17, 18) coniques et un arbre de support (21),
lesdits premier et second engrenages coniques comprenant chacun une couronne (17a, 18a) et un pignon (17b, 18b) s'engrenant l'un(e) avec l'autre,
ledit arbre de support (21) pouvant être raccordé à ladite source d'entraînement (7) et étant porté en rotation libre dudit boîtier (2),
un élément parmi lesdites couronnes (17a, 18a) et lesdits pignons (17b, 18b) étant accouplé en rotation à un élément parmi ledit arbre de support (21) et ledit porteur (11) et l'autre élément parmi lesdites couronnes (17a, 18a) et lesdits pignons (17b, 18b) étant sélectivement accouplé en rotation à l'autre élément parmi ledit arbre de support (21) et ledit porteur (11),
dans lequel l'autre élément parmi lesdites couronnes (17a, 18a) et lesdits pignons (17b, 18b) peut être sélectivement accouplé en rotation à l'autre élément parmi ledit arbre de support (21) et ledit porteur (11) au moyen d'un sélecteur (24) mobile entre une première condition de fonctionnement dans laquelle il accouple en rotation un élément parmi lesdites couronnes (17a, 18a) à l'autre élément parmi ledit arbre de support (21) et ledit porteur (11) et une seconde condition de fonctionnement dans laquelle l'autre élément accouple lesdites couronnes (17a, 18a) à l'autre élément parmi ledit arbre de support (21) et ledit porteur (11), ledit sélecteur (24) étant commandé par des moyens d'actionneur (25) configurés pour son port de la première à la seconde condition de fonctionnement,
dans lequel ledit arbre de support (21) porte lesdits pignons (17b, 18b) qui lui sont accouplés en rotation au moyen d'un accouplement rainuré (23), ledit sélecteur (24) étant configuré pour coulisser, accouplé en rotation, vers ledit porteur (11) pour accoupler alternativement une desdites couronnes (17a, 18a) audit porteur (11),
**caractérisé en ce que** lesdites couronnes (17a, 18a) sont supportées en rotation entre ledit boîtier (2), ledit porteur (11) et entre eux au moyen d'éléments de support rotatifs (22).

2. Groupe différentiel selon la revendication 1, dans lequel ledit arbre de support (21) s'étend le long d'un axe (B) perpendiculaire auxdits arbres d'essieu (4, 5) .

3. Groupe différentiel selon la revendication 1 ou 2, dans lequel lesdits engrenages (17, 18) sont dimensionnés de sorte que les diamètres primitifs de l'un (17) soient supérieurs à ceux de l'autre (18).

4. Groupe différentiel selon l'une quelconque des revendications précédentes, dans lequel lesdits pignons (17a, 18b) sont supportés par ledit arbre de support (21) au moyen d'un accouplement rainuré (23).

5. Groupe différentiel selon l'une des revendications précédentes, dans lequel ledit sélecteur (24) comprend un manchon (26) tubulaire configuré pour être logé autour dudit porteur (11) et accouplé à celui-ci au moyen d'un accouplement rainuré (23), ledit manchon (26) étant configuré pour se déplacer le long dudit porteur (11) et définissant une denture (28) configurée pour venir sélectivement en prise avec des dents (31, 32) respectives solidement raccordées respectivement auxdites couronnes (17a, 18a) selon la position dudit manchon (26) sur ledit porteur (11).

6. Groupe différentiel selon la revendication 5, comprenant des moyens élastiques (33) configurés pour exercer une force de manière à maintenir ledit manchon (26) dans l'une desdites première et seconde conditions de fonctionnement.

7. Groupe différentiel selon l'une des revendications précédentes, dans lequel lesdits moyens d'actionneur (25) comprennent un système pneumatique.

8. Groupe différentiel selon les revendications 6 et 7, dans lequel lesdits moyens d'actionneur (25) sont configurés pour exercer une force contraire à celle exercée par des moyens élastiques (33).

9. Groupe différentiel selon l'une des revendications précédentes, comprenant des moyens de verrouillage (40) configurés pour verrouiller la fonction dudit différentiel (8).

10. Essieu de véhicule (6) comprenant des premier et second arbres d'essieu (4, 5) et un groupe différentiel (1) configuré pour raccorder lesdits arbres d'essieu (4, 5) à une source d'entraînement (7) dudit véhicule, ledit groupe différentiel (1) étant réalisé selon l'une des revendications précédentes.
